# EUROPEAN PATENT SPECIFICATION

(11) **EP 3 495 076 B1**
(45) Date of publication and mention of the grant of the patent: **24.03.2021**
(21) Application number: 18210679.9
(22) Date of filing: 06.12.2018
(51) Int. Cl.: B22F 1/02, B22F 3/105, B33Y 70/00, B29C 64/153, H01F 1/053, H01F 1/06, H01F 1/08, H01F 41/02, B33Y 80/00

(54) **ALUMINUM ALLOY PARTICLE WITH A PERMANENT MAGNET CORE**
ALUMINIUMLEGIERUNGSPARTIKEL MIT EINEM PERMANENTMAGNETKERN
PARTICULE D'ALLIAGE D'ALUMINIUM COMPORTANT UN NOYAU À AIMANT PERMANENT

(30) Priority: 11.12.2017 US 201715837770
(43) Date of publication of application: 12.06.2019
(73) Proprietor: Hamilton Sundstrand Corporation, Charlotte, NC 28217-4578 (US)
(72) Inventor: KARLEN, Eric W., Rockford, IL 6114 (US); WENTLAND, William Louis, Rockford, IL 6114 (US)
(74) Representative: Dehns

(56) References cited:
- EP-A1- 0 056 257
- JP-A- 2000 046 073

## Description

### BACKGROUND

Many directed energy deposition processes use metallic powders/particles as the feedstock material. In these processes, a thin layer of powder is distributed across a build platform and subjected to an energy input from a laser (or other energy source) to fuse the layer. The process is repeated until the desired component is formed. Manufactured components are often subjected to post-manufacturing processes like machining to further refine the component.

When permanent magnetic materials are used in a feedstock, the resulting components can be brittle and difficult to machine. Adding aluminum alloys to the feedstock can improve the workability of a manufactured component, but the reflectivity of some aluminum alloys can interfere with the laser during manufacturing. JP 2000046 073A relates to magnetic powder. EP005 6257 A1 relates to magnetic powder.

### SUMMARY

A particle for use in a powder-based additive manufacturing process as defined in claim 1 is provided and includes a magnetic core having a first magnetic permeability, and an aluminum alloy coating surrounding the magnetic core. The aluminum alloy coating has a second magnetic permeability lower than the first magnetic permeability.

A three-dimensional magnetic component includes an aluminum alloy matrix, and a plurality of particles dispersed throughout the matrix. Each of the particles includes a magnetic core having a first magnetic permeability, and an aluminum alloy coating surrounding the magnetic core. The aluminum alloy coating has a second magnetic permeability lower than the first magnetic permeability.

A method of making a three-dimensional magnetic component includes applying a layer of a feedstock to a build substrate, and fusing the layer using an energy source. The feedstock includes a plurality of magnetic particles having a permanent magnetic core and an aluminum alloy coating surrounding the permanent magnetic core.

### BRIEF DESCRIPTION OF THE DRAWINGS

FIG. 1 is a cross-section of a particle suitable for use in a powder-based additive manufacturing process.
FIG. 2 is a magnified cross-section of a portion of a magnetic component.
FIG. 3 is a cross-section of a magnetic component.
FIG. 4 is a cross-section of an alternative magnetic component.

### DETAILED DESCRIPTION

The present invention is directed to particles for use as a feedstock for manufacturing magnetic components. The particles include a magnetic core coated with an aluminum-silicon alloy. The particles can further include an optional outer silicon coating. The particles can be included in a feedstock used to produce a magnetic component. An aluminum alloy powder can be added to the feedstock to enhance an aluminum matrix surrounding the fused particles. The resulting components have a more robust microstructure and can be formed with more complex geometries than those produced using current manufacturing methods and materials.

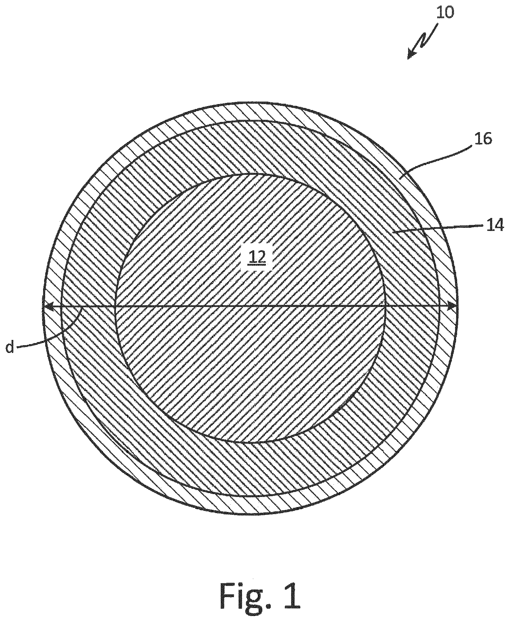

FIG. 1 is an enlarged cross-section of magnetic particle 10. Particle 10 includes magnetic core 12 and aluminum-silicon coating 14 surrounding core 12. Particle 10, as shown, also includes coating 16, although exemplary embodiments of particle 10 do not require coating 16. Core 12 is formed from a sintered powder of magnetic material. The material can be a permanent magnetic material formed from rare earth elements. For example, core 12 can be formed from an alloy of samarium or neodymium. Other suitable permanent magnet materials, such as ceramics, ferrites, and manganese bismuth are contemplated herein.

Coating 14 is an aluminum alloy of a composition that is considered suitable for welding added to enhance the material properties of particle 10. For example, such alloys experience less solidification cracking than other materials. The alloys for coating 14 are A112Si, AlSi10Mg, Aluminum 356.0, or Aluminum 357.0. Coating 14 has low magnetic permeability (µ) compared to core 12, such that coating 14 does not interfere with a magnetic field generated within core 12.

Coating 14 can be applied to core(s) 12 using a fluidized bed powder coating process, during which heated cores 12 are immersed in a container of an aluminum-silicon alloy powder, or are passed through a cloud of electrically charged powder. Coating 14 can alternatively be applied using a mechanical dry coating process, such as ball milling. Other suitable coating techniques are contemplated herein.

Coating 16 is a silicon-based coating that can be applied to increase the silicon content of particle 10. For example, a 6000 series aluminum alloy has a lower silicon content (compared to other coating 14 materials), so an embodiment using such an alloy for coating 14 can benefit from the addition of coating 16. Coating 16 can be applied using one of the methods described above with respect to coating 14. Alternatively, coating 16 can be applied using a chemical vapor deposition (CVD) process. Coatings 14 and/or 16 can, but do not always, coat the entire surface of core 12/coating 14. The extent to which each coating 14 and/or 16 covers the underlying surface will depend on, for example, surface imperfections or the coating process used.

Particle 10 can have a spherical or near-spherical shape in order to optimize particle packing when forming a component. Particle 10 can have a diameter (d) ranging from 15 µm to 150 µm. The diameter can range from 40 µm to 45 µm in an exemplary embodiment. The diameter of particle 10 depends on such factors as the number and thickness of coatings applied over core 12, or the build parameters for the desired component.

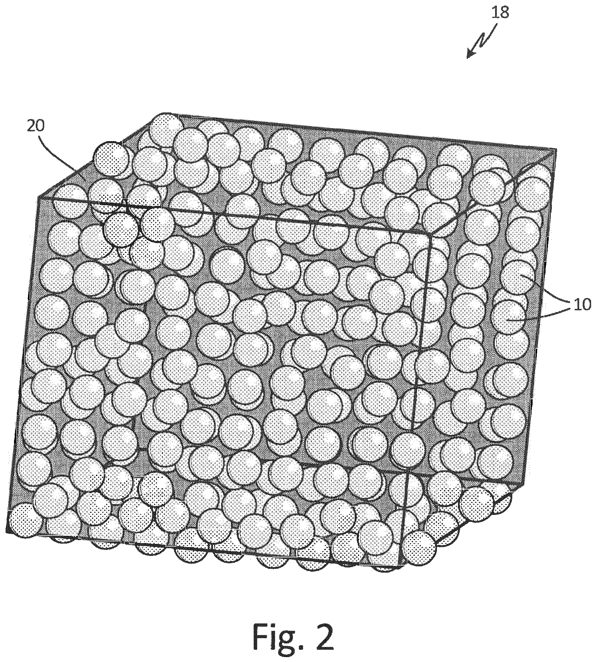

FIG. 2 is a magnified, three-dimensional cross-section showing a portion of magnetic component 18, formed as an aluminum metal matrix composite. As can be seen in FIG. 2, particles 10 are contained within matrix 20. Matrix 20 is an aluminum matrix that can be formed by adding a supplemental aluminum powder material to the feedstock containing particles 10. It is also considered that the supplemental aluminum powder can be introduced into component 18 separately, but concurrent with particles 10. The supplemental powder material can be formed from an aluminum alloy, such as the aluminum-silicon alloys used to form coating 14. Other suitable aluminum alloys are contemplated herein.

The density (p) of component 18 (the number or particles 10 per cubic volume) can be tailored depending on the requirements of component 18. Density can range from, for example, 25% to 74%, depending on factors such as particle distribution and size, as well as the magnetic material used and the magnetic field requirements of component 18. For example, if component 18 needs only to be weakly magnetic, it can be made to be less dense than components for other applications. In an exemplary embodiment, particles 10 can be of uniform size and distribution. In other embodiments, however, particles 10 can be arranged in a less ordered fashion, and/or can vary in size, depending on the desired mechanical properties or the manufacturing process used.

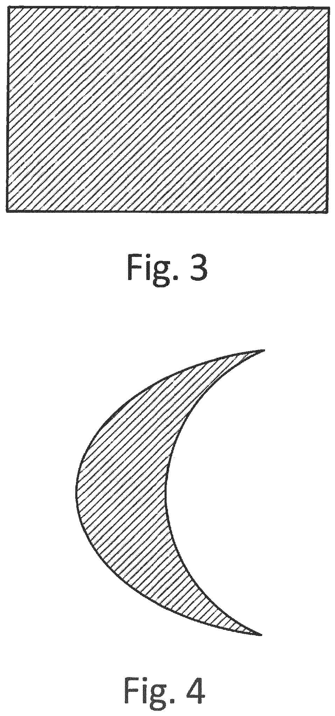

Component 18 can be formed using a powder-based, directed energy deposition process, using a feedstock of particles 10 and the supplemental aluminum alloy powder. The feedstock is deposited as a thin layer onto a build substrate, and a laser (or other energy source) fuses the layer. The process is repeated to form component 18. Component 18 can be formed to have various geometries, and can include straight or curved sides. For example, a cross-sectional shape of component 10 can be rectangular or crescent shaped, as is shown in FIGS. 3 and 4, respectively. Other cross-sectional shapes, such as a circle, ellipse, star, or polygon are contemplated herein. Component 18 can undergo post-manufacturing machining to smooth edges, create surface enhancements, etc. Finally, component 18 can be magnetized using an electric current. Component 18 can be incorporated into, for example, a permanent magnetic generator.

The disclosed particles can be used to form components having improved mechanical properties, and can allow for the manufacture of components having complex geometries. The disclosed components can be used in a variety of applications, including aerospace, automotive, and other transportation industries.

### Discussion of Possible Embodiments

The following are non-exclusive descriptions of possible embodiments of the present invention.

A particle for use in a powder-based additive manufacturing process includes a magnetic core having a first magnetic permeability, and an aluminum alloy coating surrounding the magnetic core. The aluminum alloy coating has a second magnetic permeability lower than the first magnetic permeability.

The particle of the preceding paragraph can optionally include, additionally and/or alternatively, any one or more of the following features, configurations and/or additional components:

The above particle can further include a silicon-based coating surrounding the aluminum alloy coating.

In any of the above particles, the magnetic particle can have a spherical or near-spherical shape.

In any of the above particles, a particle diameter can range from 15 µm to 150 µm.

In any of the above particles, a particle diameter can range from 40 µm to 45 µm.

In any of the above particles, the magnetic core can be formed from a permanent magnetic material.

In any of the above particles, the permanent magnetic material can include a rare earth element.

In any of the above particles, the aluminum alloy coating can include a material selected from the group consisting of A112Si, AlSi10Mg, C356, C357, and combinations thereof.

A three-dimensional magnetic component includes an aluminum alloy matrix, and a plurality of particles dispersed throughout the matrix. Each of the particles includes a magnetic core having a first magnetic permeability, and an aluminum alloy coating surrounding the magnetic core. The aluminum alloy coating has a second magnetic permeability lower than the first magnetic permeability.

In the above component, a density of the particles within the matrix can range from 25% to 74%.

In any of the above components, the aluminum alloy matrix and the aluminum alloy coating can be formed from the same material.

Any of the above components can further include a silicon-based coating surrounding the aluminum alloy coating.

In any of the above components, a cross-sectional shape of the component can include a straight portion.

In any of the above components, a cross-sectional shape of the component can include a curved portion.

A method of making a three-dimensional magnetic component includes applying a layer of a feedstock to a build substrate, and fusing the layer using an energy source. The feedstock includes a plurality of magnetic particles having a permanent magnetic core and an aluminum alloy coating surrounding the permanent magnetic core.

The above method can further include repeating the steps of applying the layer and fusing the layer to form the three-dimensional component.

Any of the above methods can further include machining the three-dimensional component.

Any of the above methods can further include magnetizing the three-dimensional component using an electric current.

In any of the above methods, the feedstock can further include an aluminum alloy powder.

In any of the above methods, each of the particles can further include a silicon-based coating surrounding the aluminum alloy coating.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A particle (10) for use in a powder-based additive manufacturing process comprising:
a magnetic core (12) having a first magnetic permeability; and
an aluminum alloy coating (14) surrounding the magnetic core (12), the aluminum alloy coating (14) having a second magnetic permeability lower than the first magnetic permeability; **characterized in that**
the aluminum alloy coating (14) comprises a material selected from the group consisting of Al12Si, AlSi10Mg, Aluminum 356.0, Aluminum 357.0, and combinations thereof.

2. The particle of claim 1 and further comprising: a silicon-based coating (16) surrounding the aluminum alloy coating.

3. The particle of claim 1, wherein the magnetic particle (10) has a spherical shape.

4. The particle of claim 3, wherein a particle diameter ranges from 15 µm to 150 µm, and preferably wherein a particle diameter ranges from 40 µm to 45 µm.

5. The particle of any preceding claim, wherein the magnetic core (12) is formed from a permanent magnetic material, and preferably wherein the permanent magnetic material comprises a rare earth element.

6. A three-dimensional magnetic component comprising:
an aluminum alloy matrix; and
a plurality of particles (10) according to claim 1 dispersed throughout the matrix, each of the particles comprising:
a magnetic core (12) having a first magnetic permeability; and
an aluminum alloy coating (14) surrounding the magnetic core (12), the aluminum alloy coating (14) having a second magnetic permeability lower than the first magnetic permeability.

7. The component of claim 6, wherein a density of the particles within the matrix ranges from 25% to 74%.

8. The component of claim 6 or 7, wherein the aluminum alloy matrix and the aluminum alloy coating are formed from the same material.

9. The component of claim 6, 7 or 8 and further comprising: a silicon-based coating surrounding the aluminum alloy coating.

10. The component of claim 6, 7, 8 or 9 wherein a cross-sectional shape of the component has a straight portion, or wherein a cross-sectional shape of the component has a curved portion.

11. A method of making a three-dimensional magnetic component, the method comprising:
applying a layer of a feedstock to a build substrate, the feedstock comprising a plurality of particles (10) according to claim 1, each of the particles (10) comprising a permanent magnetic core (12) and an aluminum alloy coating (14) surrounding the permanent magnetic core (12); and
fusing the layer using an energy source.

12. The method of claim 11 and further comprising: repeating the steps of applying the layer and fusing the layer to form the three-dimensional component, and preferably further comprising: machining the three-dimensional component, and/or further comprising: magnetizing the three-dimensional component using an electric current.

13. The method of claim 11 or 12, wherein the feedstock further includes an aluminum alloy powder.

14. The method of claim 11, 12 or 13, wherein each of the particles (10) further comprises a silicon-based coating surrounding the aluminum alloy coating (14).

## Patentansprüche

1. Partikel (10) zur Verwendung in einem pulverbasierten Additiv-Herstellungsverfahren, umfassend:
einen Magnetkern (12), der eine erste magnetische Permeabilität aufweist; und
eine Aluminiumlegierungsbeschichtung (14), die den Magnetkern (12) umgibt, wobei die Aluminiumlegierungsbeschichtung (14) eine zweite magnetische Permeabilität aufweist, die geringer als die erste magnetische Permeabilität ist; **dadurch gekennzeichnet, dass**
die Aluminiumlegierungsbeschichtung (14) ein Material umfasst, das aus der Gruppe bestehend aus Al12Si, AlSi10Mg, Aluminium 356,0, Aluminium 357,0 und Kombinationen davon ausgewählt ist.

2. Partikel nach Anspruch 1 und ferner umfassend: eine Beschichtung (16) auf Siliziumbasis, die die Aluminiumlegierungsbeschichtung umgibt.

3. Partikel nach Anspruch 1, wobei der magnetische Partikel (10) eine Kugelform aufweist.

4. Partikel nach Anspruch 3, wobei ein Partikeldurchmesser von 15 µm bis 150 µm reicht, und wobei ein Partikeldurchmesser bevorzugt von 40 µm bis 45 µm reicht.

5. Partikel nach einem der vorhergehenden Ansprüche, wobei der Magnetkern (12) aus einem Permanentmagnetmaterial ausgebildet ist, und
wobei das Permanentmagnetmaterial bevorzugt ein seltenes Erdelement umfasst.

6. Dreidimensionale magnetische Komponente, umfassend:
eine Aluminiumlegierungsmatrix; und
eine Vielzahl von Partikeln (10) nach Anspruch 1, die in der gesamten Matrix verteilt ist, wobei jeder der Partikel Folgendes umfasst:
einen Magnetkern (12), der eine erste magnetische Permeabilität aufweist; und
eine Aluminiumlegierungsbeschichtung (14), die den Magnetkern (12) umgibt, wobei die Aluminiumlegierungsbeschichtung (14) eine zweite magnetische Permeabilität aufweist, die geringer als die erste magnetische Permeabilität ist.

7. Komponente nach Anspruch 6, wobei eine Dichte der Partikel innerhalb der Matrix von 25 % bis 74 % reicht.

8. Komponente nach Anspruch 6 oder 7, wobei die Aluminiumlegierungsmatrix und die Aluminiumlegierungsbeschichtung aus demselben Material ausgebildet sind.

9. Komponente nach Anspruch 6, 7 oder 8 und ferner umfassend:
eine Beschichtung auf Siliziumbasis, die die Aluminiumlegierungsbeschichtung umgibt.

10. Komponente nach Anspruch 6, 7, 8 oder 9, wobei eine Querschnittsform der Komponente einen geraden Abschnitt aufweist, oder wobei eine Querschnittsform der Komponente einen gekrümmten Abschnitt aufweist.

11. Verfahren zum Herstellen einer dreidimensionalen magnetischen Komponente, wobei das Verfahren Folgendes umfasst:
Aufbringen einer Schicht eines Ausgangsmaterials auf ein Aufbausubstrat, wobei das Ausgangsmaterial eine Vielzahl von Partikeln (10) nach Anspruch 1 umfasst, wobei jeder der Partikel (10) einen Permanentmagnetkern (12) und eine Aluminiumlegierungsbeschichtung (14), die den Permanentmagnetkern (12) umgibt, umfasst; und
Verschmelzen der Schicht unter Verwendung einer Energiequelle.

12. Verfahren nach Anspruch 11 und ferner umfassend: Wiederholen der Schritte vom Aufbringen der Schicht und Verschmelzen der Schicht, um die dreidimensionale Komponente auszubilden, und ferner bevorzugt umfassend: Bearbeiten der dreidimensionalen Komponente, und/oder
ferner umfassend: Magnetisieren der dreidimensionalen Komponente unter Verwendung eines elektrischen Stroms.

13. Verfahren nach Anspruch 11 oder 12, wobei das Ausgangsmaterial ferner ein Aluminiumlegierungspulver beinhaltet.

14. Verfahren nach Anspruch 11, 12 oder 13, wobei jeder der Partikel (10) ferner eine Beschichtung auf Siliziumbasis umfasst, die die Aluminiumlegierungsbeschichtung (14) umgibt.

## Revendications

1. Particule (10) à utiliser dans un processus de fabrication additive à base de poudre comprenant :
un noyau magnétique (12) ayant une première perméabilité magnétique ; et
un revêtement d'alliage d'aluminium (14) entourant le noyau magnétique (12), le revêtement d'alliage d'aluminium (14) ayant une seconde perméabilité magnétique inférieure à la première perméabilité magnétique ; **caractérisée en ce que** le revêtement d'alliage d'aluminium (14) comprend un matériau sélectionné parmi le groupe composé d'Al12Si, d'AlSi10Mg, d'aluminium 356.0, d'aluminium 357.0 et de combinaisons de ceux-ci.

2. Particule selon la revendication 1 et comprenant en outre :
un revêtement à base de silicium (16) entourant le revêtement d'alliage d'aluminium.

3. Particule selon la revendication 1, dans laquelle la particule magnétique (10) a une forme sphérique.

4. Particule selon la revendication 3, dans laquelle un diamètre de particule est compris entre 15 pm et 150 pm, et de préférence dans laquelle un diamètre de particule est compris entre 40 pm et 45 pm.

5. Particule selon une quelconque revendication précédente, dans laquelle le noyau magnétique (12) est formé à partir d'un matériau magnétique permanent, et de préférence dans laquelle le matériau magnétique permanent comprend des terres rares.

6. Composant magnétique tridimensionnel comprenant :
une matrice d'alliage d'aluminium ; et
une pluralité de particules (10) selon la revendication claim 1 dispersées à travers la matrice, chacune des particules comprenant :
un noyau magnétique (12) ayant une première perméabilité magnétique ; et
un revêtement d'alliage d'aluminium (14) entourant le noyau magnétique (12), le revêtement d'alliage d'aluminium (14) ayant une seconde perméabilité magnétique inférieure à la première perméabilité magnétique.

7. Composant selon la revendication 6, dans lequel une densité des particules à l'intérieur de la matrice est comprise entre 25 % et 74 %.

8. Composant selon la revendication 6 ou 7, dans lequel la matrice d'alliage d'aluminium et le revêtement d'alliage d'aluminium sont formés à partir du même matériau.

9. Composant selon la revendication 6, 7 ou 8 et comprenant en outre : un revêtement à base de silicium entourant le revêtement d'alliage d'aluminium.

10. Composant selon la revendication 6, 7, 8 ou 9 dans lequel une forme transversale du composant a une partie droite, ou dans lequel une forme transversale du composant a une partie incurvée.

11. Procédé de réalisation d'un composant magnétique tridimensionnel, le procédé comprenant :
l'application d'une couche d'une matière première à un substrat de construction, la matière première comprenant une pluralité de particules (10) selon la revendication 1, chacune des particules (10) comprenant un noyau magnétique permanent (12) et un revêtement d'alliage d'aluminium (14) entourant le noyau magnétique permanent (12) ; et
la fusion de la couche à l'aide d'une source d'énergie.

12. Procédé selon la revendication 11 et comprenant en outre :
la répétition des étapes d'application de la couche et de fusion de la couche pour former le composant tridimensionnel, et de préférence
comprenant en outre : l'usinage du composant tridimensionnel, et/ou
comprenant en outre : l'aimantation du composant tridimensionnel à l'aide d'un courant électrique.

13. Procédé selon la revendication 11 ou 12, dans lequel la matière première comporte en outre une poudre d'alliage d'aluminium.

14. Procédé selon la revendication 11, 12 ou 13, dans lequel chacune des particules (10) comprend en outre un revêtement à base de silicium entourant le revêtement d'alliage d'aluminium (14) .
